(19)

Europäisches
Patentamt
European
Patent Office
Office européen
des brevets

(11) **EP 4 280 143 A1**

(12) **EUROPEAN PATENT APPLICATION**

(43) Date of publication:
**22.11.2023 Bulletin 2023/47**

(21) Application number: **23173457.5**

(22) Date of filing: **15.05.2023**

(51) International Patent Classification (IPC):
**G06Q 30/0201** (2023.01)    **G06Q 30/06** (2023.01)
**G06N 20/00** (2019.01)    **G06Q 30/0282** (2023.01)

(52) Cooperative Patent Classification (CPC):
**G06Q 30/0201; G06N 3/09; G06N 5/01;
G06Q 30/0282**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.05.2022 EP 22173564
28.06.2022 EP 22181608
30.06.2022 EP 22182427**

(71) Applicant: **Firmenich SA
1242 Satigny (CH)**

(72) Inventors:
• **CHICHESTER, Christine**
  **1242 Satigny (CH)**
• **JOUVEN, Stanislas**
  **1242 Satigny (CH)**
• **TVERDOKHLEBOVA, Elena**
  **1015 Lausanne (CH)**
• **CAPELA, Fabio André**
  **1242 Satigny (CH)**

(74) Representative: **Lavy, Séverine
Firmenich SA
Corporate Legal & Compliance - IP Group
7, rue de la Bergère
1242 Satigny (CH)**

(54) **METHOD AND SYSTEM OF DETERMINATION OF AN EMOTION OR SENSATION PERCEPTION IN RELATION TO AN EXPOSURE TO A FLAVOR OR FRAGRANCE INGREDIENTS**

(57)    The method (400) of determination of an emotion or sensation perception in relation to an exposure to a flavor or fragrance ingredients comprises:
- a step (405) of inputting, upon a computer interface, at least two flavor or fragrance physical ingredient digital representation identifiers, the resulting input corresponding to a physical composition digital identifier representative of a physical composition of physical flavor or fragrance ingredients,
- a step (410) of operating, by a computing device, instructions configured to associate, to the input a physical composition digital identifier, at least one value representative of:
- a relative ranking among the input flavor or fragrance physical ingredient digital representation identifiers relative to at least one determined perceived emotion or sensation,
- a value representative of the perception, for at least one input flavor or fragrance physical ingredient digital representation identifier, for at least one determined perceived emotion or sensation, and/or
- a value representative of a class of flavor or fragrance ingredients in a classification of flavor or fragrance ingredients by perception of perceived emotion or sensation for at least one determined emotion or sensation perception and

- a step (415) of providing, upon a computer interface, for the input physical composition digital identifier, at least one value obtained during the step of operating.

Figure 1

**Description**

TECHNICAL FIELD OF THE INVENTION

The present invention aims at a method and system of determination of an emotion or sensation perception in relation to an exposure to a flavor or fragrance ingredients.
It applies, in particular, to the industry of flavor and fragrance.

BACKGROUND OF THE INVENTION

In the field of flavor and fragrance design and production, one of the key industrial challenges is to provide flavors and fragrances that contribute to the commercial success of a product. Such products range, for example, from dairy products to soft drinks and fine perfumery. The commercial success of a product relies, for a significative part, on the psychophysical reaction of a consumer to the flavor or fragrance of the product. Such psychophysical reactions are related to the emotion or sensation perception of the flavor or fragrance. Such emotion or sensation perceptions are typically associated with words ("energizing" or "romantic" scent, for example).
The underlying reasons for psychophysical reactions may be complicated to discern and thus, on a broader level, basic psychophysical emotion or sensory reactions may be captured. Such psychophysical emotion or sensory reactions correspond to, for example, an explicit and binary output from consumers (i.e., the consumers "like" or "do not like" a product, flavor or fragrance).
In traditional approaches, prior to mass industrialization of a product, flavor or fragrance, panelists representative of a target audience for the product, flavor or fragrance are consulted and presented with the product, flavor or fragrance to capture their psychophysical emotion or sensory reactions. Based upon this feedback, the product, flavor or fragrance may be put in production, redesigned or discarded entirely.
Such approaches are costly, both in terms of time required as well as corresponding financial expenditure. Furthermore, such approaches may provide incoherent results due to the limited sample size of panelists involved. Finally, such results may be inaccurate considering their lack of modelling of significant parameters that influence (bias) human reactions to flavor or fragrance physical composition digital identifiers.
For these reasons, current approaches are unsatisfactory to reliably evaluate the psychophysical emotion or sensory reaction of humans presented with a product, fragrance or flavor.

SUMMARY OF THE INVENTION

The present invention aims at addressing all or part of these drawbacks.
According to a first aspect, the present invention aims at a method of determination of an emotion or sensation perception in relation to an exposure to a flavor or fragrance ingredients, comprising:

- a step of inputting, upon a computer interface, at least two flavor or fragrance physical ingredient digital representation identifiers, the resulting input corresponding to a physical composition digital identifier representative of a physical composition of physical flavor or fragrance ingredients,
- a step of operating, by a computing device, instructions configured to associate, to the input a physical composition digital identifier, at least one value representative of:

    - a relative ranking among the input flavor or fragrance physical ingredient digital representation identifiers relative to at least one determined perceived emotion or sensation,
    - a value representative of the perception, for at least one input flavor or fragrance physical ingredient digital representation identifier, for at least one determined perceived emotion or sensation, and/or
    - a value representative of a class of flavor or fragrance ingredients in a classification of flavor or fragrance ingredients by perception of perceived emotion or sensation for at least one determined emotion or sensation perception and

- a step of providing, upon a computer interface, for the input physical composition digital identifier, at least one value obtained during the step of operating.

Such provisions allow for the accurate determination of actual, physical reactions of human beings exposed to a composition assembled (or materialized) in accordance with the digital representation of said composition.
Such provisions also allow the use of the trained neural network devices or other algorithms in a variety of scenarios that all derive from the initial training of said neural network device. For example, in one scenario, the neural network device may be used to rank ingredients in terms of contribution to the perception of a particular human emotion or sensation. Such ranking may then be used by perfumers and flavorists in designing physical composition digital identifiers that are meant to provoke said human emotion or sensation. In another scenario, an absolute value representative of the intensity of the perceived human emotion or sensation may be derived. Such value may also be used by perfumers and flavorists in designing physical composition digital identifiers. In a third scenario, ingredients may be classified into emotion or sensation impact categories that also aid perfumers and flavorists in designing physical composition digital identifiers.

In particular embodiments, the step of operating is configured to operate a trained gradient boosting decision tree device upon the input a physical composition digital identifier.

Such provisions allow for the use of the trained gradient boosting decision tree device to predict the psychophysical emotion or sensation reaction of ulterior physical composition digital identifiers without relying on panelists. This greatly reduces the time and expenditure requires in order to assess the emotion or sensation reactions of consumers of the designed physical composition digital identifier or product incorporating the physical composition digital identifier. Furthermore, these provisions allow for the reliable prediction of the psychophysical emotion or sensation reaction of said consumers.

In particular embodiments, the method object of the present invention comprises:

- a step of providing to the gradient boosting decision tree device or to a neural network device a set of exemplar data, comprising:

  - at least two flavor or fragrance physical composition digital identifiers formed by at least two fragrant or flavor physical ingredient digital representation identifiers and
  - at least one emotion or sensation perception value for the at least two said fragrant or flavor ingredients, said emotion or sensation perception value being associated to at least one emotion or sensation perception digital identifier, said emotion or sensation perception digital identifier being representative of a category of emotion or sensation reaction, among a finite list of emotion or sensation reactions, of a human being to the materialized physical composition digital identifier,

- a step of operating the gradient boosting decision tree device or to a neural network device based upon the set of exemplar data and
- a step of obtaining a trained gradient boosting decision tree model or a trained neural network model.

Such provisions allow for the use of the trained gradient boosting decision tree device to predict the psychophysical emotion or sensation reaction of ulterior physical composition digital identifiers without relying on panelists. This greatly reduces the time and expenditure requires in order to assess the emotion or sensation reactions of consumers of the designed physical composition digital identifier or product incorporating the physical composition digital identifier. Furthermore, these provisions allow for the reliable prediction of the psychophysical emotion or sensation reaction of said consumers.

Preferably, any neural network used in a ranking configuration can be used, as opposed to regular regression neural network models.

In particular embodiments, the exemplar data further comprises, associated with at least one physical composition digital identifier, at least one digital identifier representative of:

- a gender of the human being exposed to the materialized physical composition,
- a country of origin of the human being exposed to the materialized physical composition,
- a type of use of the materialized physical composition,
- a composition chemical base used to support the materialized physical composition, and/or
- a dosage for at least one physical ingredient flavor or fragrance physical ingredient represented by the corresponding digital representation identifier.

Such criteria impact upon the perceived emotion or sensation by exposure to a flavor or fragrance physical composition digital identifier and are thus valuable parameters to the training of the gradient boosting decision tree device.

In particular embodiments, the method object of the present invention comprises, downstream of the step of operating, a step of determining, by a computing device, a numerical value representative of an emotion or sensation reaction impact for at least one input flavor or fragrance ingredient and a step of providing, upon a computer interface, the determined reaction impact numerical value.

In particular embodiments, the method object of the present invention comprises, downstream of the step of determining a numerical value representative of an emotion or sensation reaction impact, a step of providing at least one alternative flavor or fragrance physical ingredient digital representation identifier for at least one input flavor or fragrance physical ingredient digital representation identifier to form an alternative physical composition digital identifier as function of the value representative of an emotion or sensation reaction impact associated to said input and alternative flavor or fragrance physical ingredient digital representation identifier.

In particular embodiments, the step of providing at least one alternative flavor or fragrance physical ingredient digital representation identifier is configured to further provide at least one value representative of a concentration of at least one said alternative flavor or fragrance physical ingredient digital representation identifier.

Such embodiments allow for improved flavor or fragrance physical composition digital identifier design, allowing perfumers and flavorists to dynamically select and improve physical composition digital identifiers.

In particular embodiments, the step of providing at least one alternative flavor or fragrance physical ingredient digital representation identifier is configured to further provide a minimum and/or a maximum value representative of a concentration of at least one said alternative flavor or fragrance physical ingredient digital representation identifier.

Such embodiments allow for the proposition of ingredients already in the physical composition digital identifier with an adjusted concentration of the proposition of news ingredients with a particular concentration.

Such embodiments allow for the providing of values that represent thresholds of performance for said alternative ingredients.

In particular embodiments, the method object of the present invention comprises a step of assembling a physical composition corresponding to the input physical composition digital identifier or of providing the input physical composition digital identifier to a system configured to assemble physical compositions.

Such embodiments allow for the materialization of the designed physical composition digital identifier.

In particular embodiments, the method object of the present invention comprises:

- a step of assembling a database associating for at least one group of at least two flavor or fragrance physical ingredient digital representation identifiers, a value representative of a measured human emotion or sensation perception and
- a step of determining, by a computing device, a set of instructions to be operated during the step of operating.

Such embodiments allow for the constitution of a database accurately representing the reality of perceived emotions or sensations by human beings exposed to the composition.

In particular embodiments, the step of assembling a database comprises:

- a step of exposure at least one human being to a physical composition of flavor or fragrance physical ingredients,
- a step of measuring the emotion or sensation perception of said at least one human being exposed to said physical composition and
- a step of recording, in a database, a value representative of the measured perceived emotion or sensation in association to the group of flavor or fragrance physical ingredient digital representation identifiers representative of the physical ingredients used to for the composition used during the step of exposure.

In particular embodiments, the method object of the present invention comprises a step of substituting an input flavor or fragrance physical ingredient digital representation identifiers by a different and equivalent flavor or fragrance physical ingredient digital representation identifiers, said equivalence being defined in a database of equivalent flavor or fragrance physical ingredient digital representation identifiers.

Such embodiments allow for the dynamic substitution of ingredients that are equivalents and wherein the use of one of said equivalent ingredients is deprecated, notably for ecological reasons.

In particular embodiments, the step of operating comprises:

- a first step of associating, by a computing device, at least one olfactive or taste descriptor to at least one input flavor or fragrance physical ingredient digital representation identifier and
- a second step of associating, by a computing device, at least one perceived emotion or sensation as a function of at least one olfactive or taste descriptor associated to at least one input flavor or fragrance physical ingredient digital representation identifier.

Such embodiments allow for an indirect approach in which the method first determines descriptors associated with ingredients and then converts these descriptors with perceived emotions or sensations.

In particular embodiments, at least one emotion or sensation perception is representative of a perception of health or hygiene benefit associated to the exposition to the physical composition.

According to a second aspect, the present invention aims at a system of determination of an emotion or sensation perception in relation to an exposure to a flavor or fragrance ingredients, comprising:

- a step of inputting, upon a computer interface, at least two flavor or fragrance physical ingredient digital representation identifiers, the resulting input corresponding to a physical composition digital identifier representative of a physical composition of physical flavor or fragrance ingredients,
- a step of operating, by a computing device, instructions configured to associate, to the input a physical composition digital identifier, at least one value representative of:

  - a relative ranking among the input flavor or fragrance physical ingredient digital representation identifiers relative to at least one determined perceived emotion or sensation,
  - a value representative of the perception, for at least one input flavor or fragrance physical ingredient digital representation identifier, for at least one determined perceived emotion or sensation, and/or
  - a value representative of a class of flavor or fragrance ingredients in a classification of flavor or fragrance ingredients by perception of perceived emotion or sensation for at least one determined emotion or sensation perception and

- a step of providing, upon a computer interface, for the input physical composition digital identifier, at least one value obtained during the step of operating.

Such provisions provide similar benefits to those of the first aspect of the present invention.

BRIEF DESCRIPTION OF THE DRAWINGS

Other advantages, purposes and particular characteristics of the invention shall be apparent from the following non-exhaustive description of at least one particular embodiment of the present invention, in relation to the drawings annexed hereto, in which:

- Figure 1 shows, schematically, a first particular embodiment of the system object of the present invention,
- Figure 2 shows, schematically, a first particular succession of steps of the method object of the present invention,
- Figure 3 shows, schematically, a second particular succession of steps of the method object of the present invention,
- Figure 4 shows, schematically, a second particular embodiment of the system object of the present invention,
- Figure 5 shows, schematically, graphical representation of the impact of ingredients upon emotion or sensation perception,
- Figure 6 shows, schematically, a third particular succession of steps of the method object of the present invention,
- Figure 7 shows, schematically, a fourth particular succession of steps of the method object of the present invention, and
- Figure 8 shows, schematically, a particular embodiment of a computing system capable of performing a particular succession of steps of the method object of the present invention.

DETAILED DESCRIPTION OF THE INVENTION

This description is not exhaustive, as each feature of one embodiment may be combined with any other feature of any other embodiment in an advantageous manner.

Various inventive concepts may be embodied as one or more methods, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to as inclusive.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

It should be noted at this point that the figures are not to scale.

As used herein, the terms "ingredient" designate any ingredient, preferably presenting a flavoring or fragrance capacity. The terms "compound" or "ingredient" designate the same items as "ingredient." An ingredient may be formed of one or more chemical molecules. As such, an ingredient may be considered "simple" when it is mostly a single-compound ingredient or "complex" when it involves multiple compounds in ranges of set proportions between these compounds.

The terms "physical composition digital identifier" designate a liquid, solid and/or gaseous assembly of at least one ingredient.

As used herein, a "flavor" refers to the olfactory perception resulting from the sum of odorant receptor(s) activation, enhancement, and inhibition (when present) by at least one volatile ingredient via orthonasal and retronasal olfaction as well as activation of the taste buds which contain taste receptor cells. Accordingly, by way of illustration and by no means intending to limit the scope of the present disclosure, a "flavor" results from the olfactory and taste bud perception arising from the sum of a first volatile ingredient that activates an odorant receptor or taste bud associated with a coconut tonality, a second volatile ingredient that activates an odorant receptor or taste bud associated with a celery tonality, and a third volatile ingredient that inhibits an odorant receptor or taste bud associated with a hay tonality.

As used herein, a "fragrance" refers to the olfactory perception resulting from the sum of odorant receptor(s) activation, enhancement, and inhibition (when present) by at least one volatile ingredient. Accordingly, by way of illustration and by no means intending to limit the scope of the present disclosure, a "fragrance" results from the olfactory perception arising from the sum of a first volatile ingredient that activates an odorant receptor associated with a coconut tonality, a second volatile ingredient that activates an odorant receptor associated with a celery tonality, and a third volatile ingredient that inhibits an odorant receptor associated with a hay tonality.

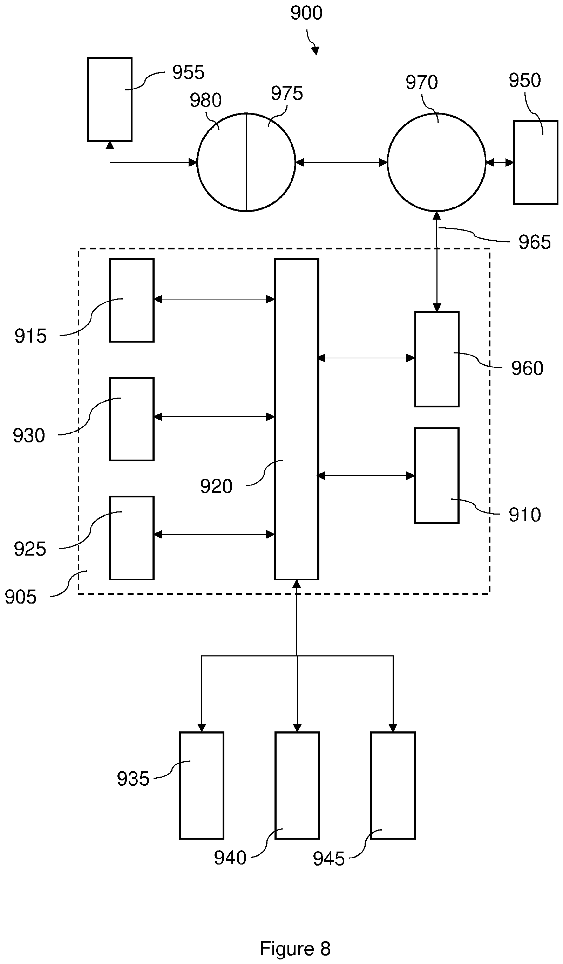

As used herein, the terms "means of inputting" is, for example, a keyboard, mouse and/or touchscreen adapted to interact with a computing system in such a way to collect user input. In variants, the means of inputting are logical in nature, such as a network port of a computing system configured to receive an input command transmitted electronically. Such an input means may be associated to a GUI (Graphic User Interface) shown to a user or an API (Application programming interface). In other variants, the means of inputting may be a sensor configured to measure a specified physical parameter relevant for the intended use case. Examples of means of inputting are disclosed in regard to figure 8.

As used herein, the terms "computing system" or "computer system" designate any electronic calculation device, whether unitary or distributed, capable of receiving numerical inputs and providing numerical outputs by and to any sort of interface, digital and/or analog. Typically, a computing system designates either a computer executing a software having access to data storage or a client-server architecture wherein the data and/or calculation is performed at the server side while the client side acts as an interface. Examples of such computing systems are disclosed in regard to figure 8.

As used herein, the terms "digital representation identifier" refer to any bijective digital representation of a physical item, such as a composition or a flavor or fragrance ingredient. Such a digital representation identifier may correspond to, for example, an entry in a database. A digital representation identifier may refer to a label representative of the name, chemical structure or internal reference of a flavor or fragrance ingredient, for example.

As used herein, the terms "emotion or sensation perception" refer to any measurable emotional or sensory rendition of perception induced by exposing a human being to a composition physical composition digital identifier. Such a measurement may be observed with neural imaging technologies, for example. Such a perception may relate to an emotion felt by a human being (such as happiness, for example) or to the perception of a sensation by said human being (such as being cold, for example).

Such an emotion or sensation may belong to one of the following categories:

- sensuality (sensual, romantic, desire),

- energy (revitalised, energetic, refreshed),
- happiness (pleasantly-surprised, happy, wellbeing),
- indulgence (mouth-watering, thirsty, famished),
- unpleasant (digusted, irrated, unpleasantly surprised),
- nostalgia (nostalgic, melancholy, sad),
- interest (amused, impressed, interested),
- peacefulness (soothed, comforted, relaxed), and
- spirituality.

Such an emotion or sensation (or sometimes labelled as an attribute or impression) may also belong to one of the following categories:

- aggressive,
- amusement,
- antiseptic,
- artificial,
- baby,
- caring,
- cheap,
- citrus,
- classical,
- clean,
- comforted,
- creamy,
- desire,
- disgusted,
- easy to wear,
- edible,
- elegant/refined,
- energetic,
- feminine,
- floral,
- fresh,
- fruity,
- gourmand,
- green,
- happy,
- has character,
- heavy,
- impressed,
- interested,
- irritated,
- light,
- liking,
- long-lasting,
- makes me feel good,
- masculine,
- medicinal,
- melancholic,
- modern,
- moisturizing,
- mouth-watering,
- natural,
- neutral,
- new,
- nostalgic,
- old-fashioned,
- overpowering,

- pleasantly surprised,
- pure,
- refreshed,
- relaxed,
- revitalized,
- romantic,
- sad,
- sensual,
- soapy,
- soft,
- soothed,
- sour,
- spicy,
- sporty,
- strong,
- sweet,
- that fits you well,
- unpleasantly surprised,
- well-being, and/or
- woody.

In the present description, the term 'materialized' or 'assembled' is intended as existing outside of the digital environment of the present invention. 'Materialized' may mean, for example, readily found in nature or synthesized in a laboratory or chemical plant. In any event, a materialized physical composition digital identifier presents a tangible reality. The terms 'to be compounded' or 'compounding' refer to the act of materialization of a physical composition digital identifier, whether via extraction and assembly of ingredients or via synthetization and assembly of ingredients.

The embodiments disclosed below are presented in a general manner.

As an example, the present invention may be used to predict the emotion or sensation reaction of human users presented with a physical composition digital identifier that is intended to provide a "romantic" emotion or sensation.

Furthermore, the present invention may be used to predict an overall liking/disliking of a physical composition digital identifier or, more specifically, an aroma liking/disliking prediction and/or a flavor liking/disliking prediction.

As a sample input for the following examples, the data from 3500 tests, with every test contains eight compositions tested together with eighty to a hundred panelists participating in every test can be used. Such data may illustrate different human biases:

- Country bias - in Mexico 80-90% of panelist votes are usual, while in Germany 50-60% are already very high numbers,
- Application bias - the same perfume composition tested in two different applications may have different results and
- Test bias - compositions tested together influence results of each other - a very sweet composition tested together with other composition may lower the others sweetness scores, because all these comparisons are relative.

For example, the outcome of two different tests ranking sweetness among three compositions may be:

- Test1

    - composition1 11.4
    - composition226.3
    - compositions 19.7

- Test2

    - composition1 21.4
    - composition237.3
    - compositions 25.7

In this example, one can see quite a common situation - values in both tests are different, while relative relationships (i.e., ranking) stays the same - i.e., one composition will be sweeter that another one in both tests while their scores in different test can be different. Therefore, scoring values are only valid inside one specific test and rather than training the model object of the present invention to predict these scores (such as a regression model would), the model is trained to rank compositions correctly (and is therefore a ranking model). An advantage of ranking model is that it captures each test separately and adapts their parameters to rank compositions aligned with ground truth ranking. As it is understood, such provisions allow for the prediction of pairwise rankings of ingredients forming a physical composition digital identifier.

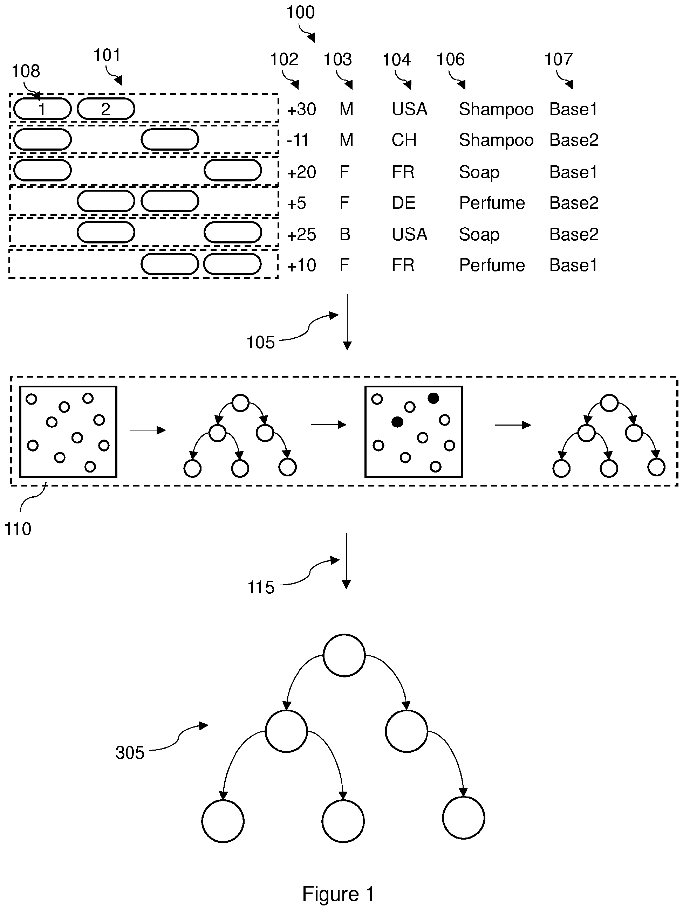

Figure 1 shows a particular embodiment of the system 100 object of the present invention. This system 100 for training a gradient boosting decision tree device or a neural network device associating perceived emotion or sensation to flavor or fragrance physical composition digital identifiers of at least one fragrant or flavor ingredient, comprises one or more computer processors and one or more computer-readable media operatively coupled to the one or more computer processors, wherein the one or more computer-readable media store instructions that, when executed by the one or more computer processors, cause the one or more computer processors to execute at least the following steps:

- providing 105 to the gradient boosting decision tree device a set of exemplar data, comprising:

  - at least two flavor or fragrance physical composition digital identifiers 101 formed by at least two fragrant or flavor physical ingredient digital representation identifiers and
  - at least one emotion or sensation perception value 102 for the at least two said fragrant or flavor ingredients, said emotion or sensation perception value being associated to at least one emotion or sensation perception digital identifier, said emotion or sensation perception digital identifier being representative of a category of emotion or sensation reaction, among a finite list of emotion or sensation reactions, of a human being to the materialized physical composition digital identifier,

- operating 110 the gradient boosting decision tree device based upon the set of exemplar data and
- obtaining 115 the trained gradient boosting decision tree device.

The system 100 as such may be formed of any combination of means to execute the characteristic steps executed by the computer processors.

The step 105 of providing may be performed, via a computer interface, such as an API or any other digital input system. This step 105 of providing may be initiated manually or automatically. The set of exemplar data may be assembled manually, upon a computer interface, or automatically, by a computing system, from a larger set of exemplar data.

The exemplar data may comprise, for example:

- at least two flavor or fragrance physical composition digital identifiers 101 formed by at least two fragrant or flavor physical ingredient digital representation identifiers and

- at least one emotion or sensation perception value 102 for the at least two said fragrant or flavor ingredients, said emotion or sensation perception value being associated to at least one emotion or sensation perception digital identifier, said emotion or sensation perception digital identifier being representative of a category of emotion or sensation reaction, among a finite list of emotion or sensation reactions, of a human being to the materialized physical composition digital identifier.

For example, fragrant or flavor physical ingredient digital representation identifiers may correspond to the name of the ingredients or references to entries in databases of characteristics associated with said ingredients. Such identifiers may be universal unique identifiers ("UUID") for example.

The emotion or sensation perception value 102 may correspond to, for example, a numerical representation of the perception, between panelists in a survey, relative to the impact of an ingredient upon a determined emotion or sensation perception. Such a value 102 may be a difference is, for example, relative between said ingredients and the difference refers to a quantification of the difference between said ingredients relative to the impact of said ingredients upon a determined emotion or sensation perception. In other embodiments, this emotion or sensation perception value 102 is an absolute quantification in which an ingredient is evaluated by itself and not in relation to another ingredient.

In more advanced embodiments, the set of exemplar data may also include:

- a gender 103 of the human being exposed to the materialized physical composition,
- a country 104 of origin of the human being exposed to the materialized physical composition,
- a type of use 106 of the materialized physical composition,
- a composition chemical base 107 used to support the materialized physical composition, and/or
- a dosage 108 for at least one physical ingredient flavor or fragrance physical ingredient represented by the corresponding digital representation identifier.

Such a set of exemplar data may be obtained by assembling physical composition digital identifiers, presenting said physical composition digital identifiers to human users and recording the emotion or sensation reactions of those users. These recordings may be classified by types of emotion or sensation reaction ('relaxed', 'romantic', 'sad', 'sensual', 'thirsty', 'soothed') for example. This classification may be performed manually, by associating a tag to each emotion or sensation reaction, or automatically, by a computing system configured to process text, audio, photographic or video recordings in order to determine a type of reaction among a list of possible types of reactions. These types of emotion or sensation reaction may be associated to a type of emotion or sensation reaction digital identifier that may then be used in the set of exemplar data.

Such an emotion or sensation reaction, or emotion or sensation perception, may also correspond to a perception of health or hygiene benefit associated to the exposure to the physical composition.

In a particular example, the exemplar set may comprise values representative of at least one of the following:

- an identifier of the chemical composition of a perfume,
- a test stamp defining the identifier of the test,
- a respondent count denoting the number of consumers accessing the test to evaluate the fragrance,
- a fragrance dosage measuring the concentration of the composition inside the tested product (%),
- a country denoting the country in which the test has been performed,
- a gender denoting the consumer's gender type: both, male, female,
- an age group attribute denoting the consumer's age group: both, younger, older,
- a segment name defining at a high level the usage of the product: Body and Personal Care, Home and Fabric Care, Fine fragrance,
- a subsegment name defining the usage of the product in a more specific manner than segment name: 13 attributes,
- an application name defining the usage of the product in a more specific manner than subsegment name. It corresponds to the leaf of the tree structure defined by segment name, subsegment name, application name: 158 attributes,
- a stage name tester defining at which stage the product has been tested, containing 123 attributes, this feature includes attribute such as Neat - Squeeze bottle, Wet Clothes, In wash and so on,
- perceived emotion or sensations percentage score for the following emotions, sensations, attributes or liking,
- emotions: amused, comforted, desire, disgusted, energetic, famished, happy, impressed, interested, irritated, melancholic, mouthwatering, nostalgic, pleasantly surprised, refreshed, relaxed, revitalized, romantic, sad, soothed, unpleasantly surprised, well-being,
- attributes: aggressive, antiseptic, artificial, baby, caring, cheap, citrus, classical, clean, creamy, easy to wear, edible, elegant/refined, feminine, floral, fresh, fruity, gourmand, green, has character, heavy, light, long-lasting, makes me feel good, masculine, modern, moisturizing, natural, neutral, new, old-fashioned, overpowering, pure, sensual, soapy, soft, sour, spicy, strong, sweet, that fits you well, unique, woody and/or
- a liking score.

In particular variants, the system 100 object of the present invention comprises a step (not represented) of preprocessing the input. For example, this step of preprocessing may make use of a sparse matrix called physical composition digital identifier matrix storing the weighted partition of the used ingredients, where the weighted sum for each composition adds up to 1. The physical composition digital identifier matrix can approximately contain 1 million compositions (rows) and 6351 ingredients (columns) where the weight corresponds to the quantity of the given ingredient (column) inside the given composition (row). One may use the physical composition digital identifier matrix unchanged and replacing each composition identifier by its corresponding ingredient physical composition digital identifier.

Additionally, to select fragrances with a dosage strictly higher than 0, binarizing the encapsulation, using all ages and deleting the application name, one can additionally apply a grid search algorithm. This selects the best set of parameters for each emotion or sensation and therefore maximize the results for each emotion or sensation.

Additionally, to maximize the gain of information brought by the use of target encoding, one can compute, for each emotion or sensation, the features having the most importance from: gender, age group attribute, segment name, subsegment name, fragrance dosage. A feature is considered as the most important if the inclusion of the feature improves the quality metrics, indicating that it is a salient feature.

The step 110 of operating may be performed, for example, by a computer program executed upon a computing system. During this step 110, the gradient boosting decision tree device is configured to determine operational values for parameters of decision making within a tree architecture, said values being used in relation to future physical composition digital identifiers to provide particular knowledge relative to these physical composition digital identifiers.

Optionally, during the step 110 of operating, gradient boosting trees are built sequentially, so that each new tree minimizes the ranking loss in the context of a neural network device optimized for ranking prediction.

In other embodiments, any other neural network device technology can be used during the step 110 of operating. Such a neural network device may implement, for example, the RankNet, LambdaRank, or SoftRank algorithms.

In such embodiments, the system 100 object of the present invention comprises means to operate the following steps:

- a step of providing 105 to a neural network device a set of exemplar data, comprising:

  - at least two flavor or fragrance physical composition digital identifiers formed by at least two fragrant or flavor physical ingredient digital representation identifiers and
  - at least one emotion or sensation perception value for the at least two said fragrant or flavor ingredients, said emotion or sensation perception value being associated to at least one emotion or sensation perception digital identifier, said emotion or sensation perception digital identifier being representative of a category of emotion or sensation reaction, among a finite list of emotion or sensation reactions, of a human being to the materialized physical composition digital identifier,

- a step of operating 110 the neural network device based upon the set of exemplar data and

- a step of obtaining 115 a trained neural network model.

In previous systems, during each test, products are tested one after the other by the same group of consumers. This introduces biases in the results. When testing a product, the feeling perceived by the consumer will strongly depends on the product tested before. Consumers will unconsciously make comparisons and will therefore give results influenced by these comparisons. Consequently, a ranking algorithm based on the test stamp attribute is an innovative idea for this problem as the algorithm is trying to rank pairs of samples within each test, reproducing the real behavior as closely as possible. Furthermore, the test stamp attribute defines an identifier in the dataset which enables to use the dataset without doing any aggregation. Delimiting the group by the test stamp feature forces the comparison between the compositions that were evaluated by the consumers at the same time. Considering the technical coding implementation, the train-validation-test splits can be done by first applying a random split according to test stamp (20% test set) followed by a group K-fold split according again to test stamp (20% validation set). The decision tree neural network device training may use CatBoost using the Yeti Rank and QuerySoftmax algorithms. Yeti Rank and QuerySoftmax belong to a family of pairwise learning methods that optimize the objective function defined on pairs of data sample retrieved for a given group. An important notion of high value introduced here is the accuracy measure in relation to the gap value. A gap value is a difference between ground truth values of two compositions tested together. The accuracy measure using the gap value is a novel metric that can be used in combination with percentage of properly predicted pairs to measure accuracy of predictions.

For dealing with categorical variables, CatBoost has been shown to perform well. The hyperparameter tuning, done by maximizing the average gap score, over the max gap computed for each emotion or sensation significantly improves the training output.

In particular variants, the system 100 object of the present invention comprises a step (not represented) of post-processing by building distribution of predicted values to determine position of specific composition in a in a specific context. Ingredient impact values are correlated with quantities to select the most actionable ingredients. Other filters on ingredient criteria may be applied.

The performance of the model can be measured according to the weighted properly ranked pairs. The ranking scheme, measured by the percentage of weighted properly ranked pairs is defined by:

The performance of the model can be measured according to the weighted properly ranked pairs. The ranking scheme, measured by the percentage of weighted properly ranked pairs is defined by:

$$\frac{\sum_{t \in tests} \sum_{(a,b) \in P_2(E_t), |y_a - y_b| > gap} \begin{cases} 1(pred_a > pred_b) & if \ y_a > y_b, \\ 1(pred_a < pred_b) & if \ y_a < y_b, \end{cases}}{\sum_{t \in tests} |P_2(E_t)|}$$

where:

- $E_t$ denotes the samples contained in test $t$,
- $pred_i$ is the raking prediction score of sample $i$,
- $y_i$ is the emotion or sensation score of sample $i$, and
- $gap$ is a numerical value defined by a user.

The reasoning behind using this score is that the percentage of properly ranked pairs is weighted by the number of pairs contained in each test and passing through the condition |ya -yb|> gap. This condition is selecting only the pairs where their emotion or sensation score difference in absolute value is higher than the numerical gap value. Therefore, a usual pattern arising is an increase of the score when increasing the gap value.

Additionally, in order to have a single numerical value to implement automatic parameter tuning, one can average the ranking score for gap ranging from 0 to $\alpha*\sigma$ (emotion or sensation distribution).

An output of the ranking model is a ranking score, which is a technical value that represents measurable differences in perceived emotion or sensation perception between physical composition digital identifiers. The higher the ranking value indicates a higher-ranking position. In order to relate these abstract ranking values with meaningful output, a quantile transformer can be used to show where a composition ranks in a particular context. For example, a composition has a fresh quantile 0.68 - it means that this composition is fresher that 68% of target country and subsegment compositions.

To determine which set of ingredients are the most influential for each emotion or sensation, it is important to remember emotion or sensation scores are subject to country biases. Therefore, ingredient recommendations are supplied on a per country basis.

Recognized as the state-of-the-art method in Machine Learning explainability, the Shappley Additive Explanations (SHAP) was published in 2017 by Lundberg and Lee. SHAP assigns each feature of the input dataset, an importance value for a particular prediction.

Selecting the most influential ingredients is not a trivial task considering that the ingredients having a positive or a negative relationship between the SHAP importance scores and the ingredient dosages need to be treated separately. Linear relationships determined with Spearman correlations enabled the separation of positives from negatives relationships. The ingredients giving the most positive influence on each emotion or sensation, may be associated with defined boundary dosage given by a minimum and/or a maximum quantity for the specific ingredient. The minimum quantity for a particular ingredient can indicate the starting quantity where the ingredient becomes an enhancer for the particular emotion or sensation. Going above the minimum quantity should increase the perception of the given emotion or sensation until the maximum quantity is reached. Defined as the break point, adding more quantity than indicated by the maximum quantity result in a slow increase or a saturation or a decrease in the influence of the ingredient on the specific emotion or sensation. Ingredients having the most negative influence also gives important additional information to perfumers. Adding the negative ingredients in high quantities could drastically decrease the emotion or sensation attribute for a given emotion or sensation.

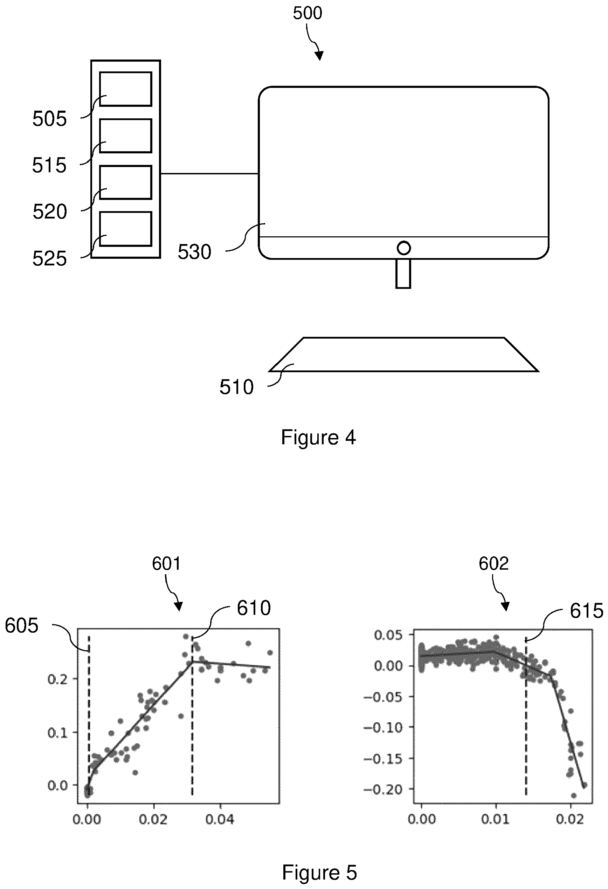

Such positive or negative relationship between ingredient concentration and emotion or sensation perception intensity of perception is shown in figure 5, in which:

- two distinct ingredient, 601 and 602, footprints are shown,
- the first ingredient 601 being associated with a positive relationship to a particular emotion or sensation perception intensity, said relationship being defined by:

    - a minimum concentration boundary 605 below which no impact is felt upon the determined emotion or sensation,
    - a maximum concentration boundary 610 above which no additional impact is felt upon the determined emotion or sensation,
    - between the minimum concentration boundary 605 and the maximum concentration boundary 610, an optimal range in which additional ingredient concentration proportionally impacts the perceived emotion or sensation,

- the second ingredient 602 being associated with a negative relationship to a particular emotion or sensation perception intensity, said relationship being defined by:

    - a maximum concentration boundary 615 above which additional ingredient concentration proportionally and negatively impacts the perceived emotion or sensation,
    - a range, below the maximum concentration boundary 615, in which no additional impact is felt upon the determined emotion or sensation regardless of the concentration of the second ingredient 602.

Considering the either the positive or negative relationships, the final importance score per ingredient is computed by taking the median over the positive or negative SHAP scores for each ingredient owing more than 50 positive or negative samples. In such manner, ingredients contributing the most positively or negatively will be the one having the highest or lowest median score.

With the intention to determine the quantity ranges and boundaries, one can approximate, for each actionable ingredient, the data points appearing in the SHAP versus the quantity plot through piecewise linear functions.

An example of a composition optimization: to improve happy attribute to target USA market for a shampoo composition that has a ranking quantile = 0.265 according to the happy model (meaning that this composition brings more happiness than 26% of USA Hair Care compositions and less happiness than 74% of USA Hair Care compositions - so there is a space for an improvement). Using Shap values, one may identify top positive and negative ingredient contributors of the ingredient space. Two ingredients out of top positive contributors are already higher than the saturation quantity limit, so these ingredients may be kept as they are, but an ingredient 3 can be increased in quantity (a current quantity is 0.2%, while the suggested saturation limit, or upper boundary, for this composition is 0.4%). Two negative ingredients have quantities higher than the maximum suggested limits, so these ingredients may be reduced to decrease their negative impact. The table below shows these effects individually and combined:

|  | Initial Impact | Initial quantity | Changed quantity | Happy attribute improvement |
|---|---|---|---|---|
| Ingredient1 | Negative | 0.00125 | 0.000741 | 0.3034 |
| Ingredient2 | Negative | 0.000416 | 0.000130 | 0.2969 |
| Ingredient3 | Positive | 0.002083 | 0.004167 | 0.3707 |
| All changes together |  |  |  | 0.4513 |

By manipulating these three ingredients, it is possible to improve liking quantile score to 0.45 from 0.26. So now the composition is more liked than 45% of USA Hair Care compositions.

An additional output of the ranking model is the so-called "DNA" which modelizes customers' behavior in different countries. For example, the attribute 'clean' is different in terms of perception for a particular country in terms of olfactive profiles. To retrieve these translations from emotion or sensation attributes to olfactive descriptors, on can calculate correlation between model predicted global ranking of compositions for a particular country and compositions' olfactive profiles. Top positively and negatively correlated olfactive descriptors show what human beings associate with a particular attribute and emotion or sensation. For some attributes, all countries are aligned - for example sweet attribute will be correlated with chocolate, caramel, vanilla for more or less all countries, while for other attributes, significant differences are observed. For example, the attribute 'natural' - among the most correlated olfactive descriptors for China there are ORANGE, GRAPEFRUIT, LEMON, CITRUS and GREEN, while for USA there are WATERY, MUGUET FLOWERS, LILY OF THE VALLEY and GREEN and GRAPEFRUIT & CITRUS are among top negatively correlated for natural.

An example of the classification outputs of the model can be shown in the following example: Based on aggregation of different ranking results for relevant categories (emotions or sensations, attributes), the present invention may classify composition in groups related to the context required (subsegment+country). For example, a composition1 is in a top class for USA Body Wash because of high predicted quantiles for liking (0.74), clean (0.69), natural (0.81) and not aggressive (0.23)

For this particular use, the model input is a composition physical composition digital identifier in a dictionary format {ingredient1 :quantity1, ingredient2:quantity2, ...} and dictionary of additional information {country:USA, segment: Persnal care, subsegment: Hair Care, gender: female}. A set of these dictionaries describing our tested compositions is transformed into a matrix format to feed the model. The target values given to the model are results of blind tests, they can be in different formats depending on the case: to train ranking one may use 'relevance values inside each test', that is the percentage of participants voted for particular attribute and emotion or sensation or mean value of scores given by participants for particular composition and particular attribute. For the regression target values are scores given by each user, for the classification - predicted ranking scores for particularly important attributes and emotions or sensations and liking.

For this particular use, the Model output is a ranking quantile for each attribute/emotion or sensation/liking in a ranking approach, average score of all participants of the test in a regression approach, relevance class of the composition for particular country and subsegment in a classification approach.

The step 115 of obtaining may be performed, via a computer interface, such as an API or any other digital output system. The obtained trained gradient boosting decision tree device or neural network device may be stored in a data storage, such as a hard-drive or database for example.

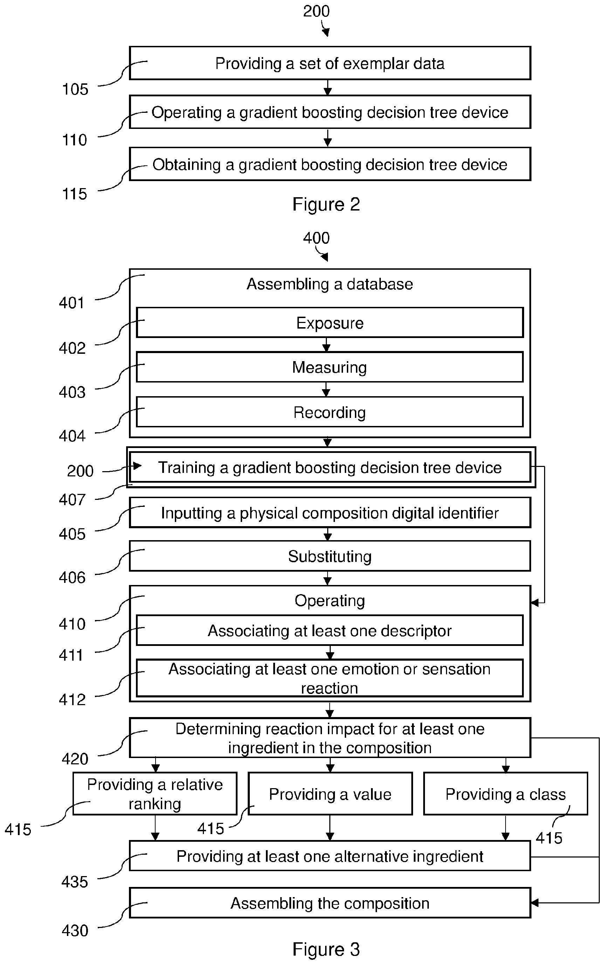

Figure 2 represents, schematically, a particular succession of steps of the method 200 object of the present invention. This method 200 to train a gradient boosting decision tree device or a neural network device associating perceived emotion or sensation to flavor or fragrance physical composition digital identifiers comprising at least one fragrant or flavor ingredient, comprises at least the following steps:

- a step of providing 105 to the gradient boosting decision tree device or to a neural network device a set of exemplar data, comprising:

- at least two flavor or fragrance physical composition digital identifiers formed by at least two fragrant or flavor physical ingredient digital representation identifiers and
- at least one emotion or sensation perception value for the at least two said fragrant or flavor ingredients, said emotion or sensation perception value being associated to at least one emotion or sensation perception digital identifier, said emotion or sensation perception digital identifier being representative of a category of emotion or sensation reaction, among a finite list of emotion or sensation reactions, of a human being to the materialized physical composition digital identifier,

- a step of operating 110 the gradient boosting decision tree device or to a neural network device based upon the set of exemplar data and
- a step of obtaining 115 a trained gradient boosting decision tree model or a trained neural network model.

As it is understood, the present invention also aims at a computer implemented gradient boosting decision tree device or a neural network device 305, characterized in that the neural network device is obtained by the computer-implemented method 200 such as disclosed with regards to figure 2.

As it is understood, the present invention also aims at a computer program product, comprising instructions to execute the steps 200 of a method such as disclosed with regards to figure 2, when executed upon a computer.

As it is understood, the present invention also aims at a computer-readable medium, storing instructions to execute the steps of a method 200 such as disclosed with regards to figure 2, when executed upon a computer.

Figure 3 shows, schematically, a particular succession of steps of the method 400 object of the present invention. This method 400 of determination of an emotion or sensation perception in relation to an exposure to a flavor or fragrance ingredients, comprises:

- a step 405 of inputting, upon a computer interface, at least two flavor or fragrance physical ingredient digital representation identifiers, the resulting input corresponding to a physical composition digital identifier representative of a physical composition of physical flavor or fragrance ingredients,
- a step 410 of operating, by a computing device, instructions configured to associate, to the input a physical composition digital identifier, at least one value representative of:

    - a relative ranking among the input flavor or fragrance physical ingredient digital representation identifiers relative to at least one determined human emotion or sensation perception,
    - a value representative of the perception, for at least one input flavor or fragrance physical ingredient digital representation identifier, for at least one determined human emotion or sensation perception, and/or
    - a value representative of a class of flavor or fragrance ingredients in a classification of flavor or fragrance ingredients by perception of human emotion or sensation perception for at least one determined human emotion or sensation reaction and

- a step 415 of providing, upon a computer interface, for the input physical composition digital identifier, at least one value obtained during the step of operating.

The step 405 of inputting is performed, for example, manually or automatically upon a computer interface, such as a graphical user interface ("GUI"). During this step 405 of inputting, flavor and/or fragrance physical ingredient digital representation identifiers may be selected to form a physical composition digital identifier that is representative of an equivalent real-life fragrance. In advanced embodiments, relative or absolute quantities of said flavor and/or fragrance physical ingredient digital representation identifiers may be input. At the outset of this step 405 of inputting, a physical composition digital identifier is defined.

The step 410 of operating is performed, for example, by a computing device. During such a step 410 of operating, an expert system algorithm may be run, in which a series of set instructions is executed to provide, based upon the input composition, a value representative of:

- a relative ranking among the input flavor or fragrance physical ingredient digital representation identifiers relative to at least one determined human emotion or sensation perception,
- a value representative of the perception, for at least one input flavor or fragrance physical ingredient digital representation identifier, for at least one determined human emotion or sensation perception, and/or
- a value representative of a class of flavor or fragrance ingredients in a classification of flavor or fragrance ingredients by perception of human emotion or sensation perception for at least one determined human emotion or sensation reaction.

In other embodiments, during this step 410 of operating, a trained gradient boosting tree model or a trained neural network model may be operated in order to determine such a value.

For example, during this step 410 of operating, the input physical composition digital identifier is fed to the gradient boosting decision tree device and the gradient boosting decision tree device returns at least one of the following:

- a relative ranking among the input flavor or fragrance physical ingredient digital representation identifiers relative to at least one determined emotion or sensation perception obtained from operating the trained gradient boosting decision tree device,
- a value representative of the perception, for at least one input flavor or fragrance physical ingredient digital representation identifier, for at least one determined emotion or sensation perception obtained from operating the trained gradient boosting decision tree device and/or
- a value representative of a class of flavor or fragrance ingredients in a classification of flavor or fragrance ingredients by perception of emotion or sensation perception for at least one determined emotion or sensation perception.

The step 415 of providing is performed, for example, by displaying upon a computer screen the predicted human reaction output by the gradient boosting decision tree device.

In particular embodiments, such as the one shown in figure 3, the method 400 object of the present invention comprises, downstream of the step 410, a step 420 of determining, by a computing device, a numerical value representative of an emotion or sensation reaction impact for at least one input flavor or fragrance ingredient and a step 415 of providing, upon a computer interface, the determined reaction impact numerical value.

A reaction impact is a numerical value representation of a ranking position determined with respect to all other formulas for a specific input (i.e. quantile value). For example, when one does not have two formulas to compare and predict which one is more fresh than another, one can compare with the context (for example all shampoos for women in USA). For example, if a formula has a quantile 0.56 for fresh, this means that this formula is fresher than 56% of USA female shampoo formulas and less fresh than 44% of USA female formulas.

In particular embodiments, such as the one shown in figure 3, the method 400 object of the present invention comprises, downstream of the step 420 of determining a numerical value representative of an emotion or sensation reaction impact, a step 435 of providing at least one alternative flavor or fragrance physical ingredient digital representation identifier for at least one flavor or fragrance physical ingredient digital representation identifier input to form the physical composition digital identifier as function of the numerical value representative of an emotion or sensation reaction impact of the said input and alternative flavor or fragrance ingredients.

An alternative flavor or fragrance physical ingredient digital representation identifier is, for example, selected as a function of the impact of said flavor or fragrance ingredient upon a determined emotion or sensation.

In particular embodiments, the step 435 of providing is configured to provide a value of a quantity or concentration of alternative flavor or fragrance ingredient.

During the step 435 of providing, an alternative flavor or fragrance physical ingredient digital representation identifier may be selected if said alternative flavor or fragrance physical ingredient digital representation identifier is associated with a similar emotion or sensation perception value or impact. Such a similar emotion or sensation perception value or impact may be determined if the emotion or sensation perception value or impact of the replacement ingredient (or candidate for replacement) is within an acceptability range from the emotion or sensation perception value or impact of the original ingredient.

In simple variants, the emotion or sensation perception value or impact of an ingredient is only assessed in relation to one emotion or sensation perception value.

In more complex variants, several emotion or sensation perception values or impacts are assessed for ingredients, in order to provide a more complete match between the emotion or sensation perception linked to exposure to the replaced ingredient and the original ingredient.

During the step 435 of providing, a single original ingredient may be replaced by a plurality of candidate ingredients and, likewise, a plurality of original ingredients may be replaced by a single candidate ingredient.

In particular variants, instead or in complement of providing an alternative flavor or fragrance physical ingredient digital representation identifier, the step 435 of providing is configured to provide an alternative quantity or concentration for at least one input flavor or fragrance physical ingredient digital representation identifier of the physical composition digital identifier.

In particular embodiments, such as the one shown in figure 3, the method 400 object of the present invention comprises a step 430 of assembling the composition represented by the input physical composition digital identifier.

Such a step 430 of assembling may be performed in a variety of ways, such as in a laboratory or a chemical plant for example.

In particular embodiments, the method 400 object of the present invention comprises:

- a step 401 of assembling a database associating for at least one group of at least two flavor or fragrance physical ingredient digital representation identifiers, a value representative of a measured human emotion or sensation perception and
- a step 407 of determining, by a computing device, a set of instructions to be operated during the step 410 of operating.

The step 401 of assembly can be performed manually, automatically or semiautomatically using any input means. During this step 401 of assembly, a group of at least two flavor or fragrance physical ingredient digital representation identifiers (corresponding to a composition or part of a composition) is associated with at a value representative of a measured human emotion or sensation perception in a computer memory.

The nature of the step 407 of determining depends on the type of instructions to be operated during the step 410 of operating. For example, this step 407 of determining may correspond to the method 200 such as disclosed in regard to figure 2. In other embodiments, this step 407 of determining may correspond to a regression algorithm used on the assembled database.

In particular embodiments, the step 401 of assembling a database comprises:

- a step 402 of exposure at least one human being to a physical composition of flavor or fragrance physical ingredients,
- a step 403 of measuring the emotion or sensation perception of said at least one human being exposed to said physical composition and
- a step 404 of recording, in a database, a value representative of the measured human emotion or sensation perception in association to the group of flavor or fragrance physical ingredient digital representation identifiers representative of the physical ingredients used to for the composition used during the step of exposure.

The step 403 of measuring can be performed by any type of sensor ordinarily used to measure the intensity or existence of an emotion or sensation perception in a human being.

The step 404 of recording can be performed by any inputs means adapted to the particular use-case.

In particular embodiments, the method 400 object of the present invention comprises a step 406 of substituting an input flavor or fragrance physical ingredient digital representation identifiers by a different and equivalent flavor or fragrance physical ingredient digital representation identifiers, said equivalence being defined in a database of equivalent flavor or fragrance physical ingredient digital representation identifiers.

Such a step 406 of substituting may be performed by creating a dictionary of synonyms between flavor or fragrance physical ingredient digital representation identifiers and by retrieving a synonym of an input flavor or fragrance physical ingredient digital representation identifier.

In particular embodiments, the step 410 of operating comprises:

- a first step 411 of associating, by a computing device, at least one olfactive or taste descriptor to at least one input flavor or fragrance physical ingredient digital representation identifier and
- a second step 412 of associating, by a computing device, at least one human emotion or sensation perception as a function of at least one olfactive or taste descriptor associated to at least one input flavor or fragrance physical ingredient digital representation identifier.

One can translate emotions and attributes into a set of olfactive descriptors or tonalities. It is possible to understand the liking in a specific context represented by notions others than actual measured attributes (e.g. natural in China is more associated with citrus descriptors (LEMON, GRAPEFRUIT), while in European countries natural is something mild like almond etc.)

Such an association can be obtained by the exposure of users to formulas and inquiring about which descriptors best suit this formula as well as which emotion or sensation perception best describes the perceived emotion or sensation by said users. From this sampling, general association rules can be statistically determined.

Figure 5 shows, schematically, a particular embodiment of the system 500 object of the present invention. This flavor or fragrance prediction emotion or sensation perception determination system 500, comprises:

- a step 505 of inputting, upon a computer interface (510), at least two flavor or fragrance physical ingredient digital representation identifiers, the resulting input corresponding to a physical composition digital identifier representative of a physical composition of physical flavor or fragrance ingredients,
- a step 515 of operating, by a computing device (520), instructions configured to associate, to the input a physical composition digital identifier, at least one value representative of:

  - a relative ranking among the input flavor or fragrance physical ingredient digital representation identifiers relative to at least one determined human emotion or sensation perception,

- a value representative of the perception, for at least one input flavor or fragrance physical ingredient digital representation identifier, for at least one determined human emotion or sensation perception, and/or
- a value representative of a class of flavor or fragrance ingredients in a classification of flavor or fragrance ingredients by perception of human emotion or sensation perception for at least one determined human emotion or sensation reaction and

- a step 525 of providing, upon a computer interface, for the input physical composition digital identifier, at least one value obtained during the step of operating.

Particular embodiments of the means, interfaces and computing device are disclosed with regards to figure 3.

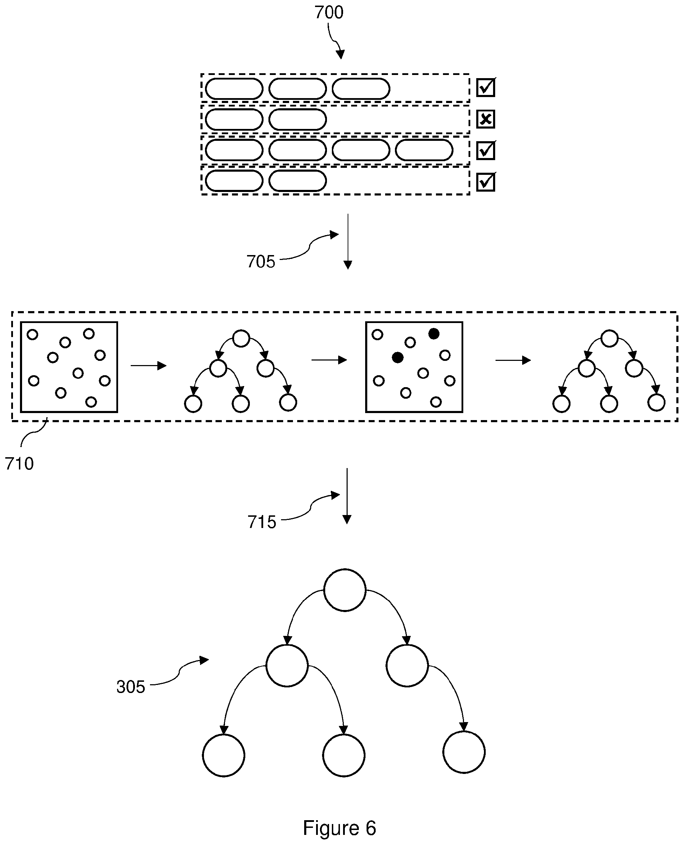

Figure 6 represents, schematically, a particular succession of steps of the method 700 object of the present invention. Such a particular succession of steps uses exemplar data which may comprise, for example:

- at least one at least one fragrant or flavor physical ingredient digital representation identifier, said at least one at least one fragrant or flavor physical ingredient digital representation identifier forming a physical composition digital identifier, said physical composition digital identifier being optionally associated with a physical composition digital identifier and
- a human reaction sensed in relation to at least one physical composition digital identifier of the exemplar set.

In more advanced embodiments, the set of exemplar data may also include:

- at least one solvent digital identifier that is associated to a physical composition digital identifier,
- at least one dosage digital identifier that is associated to the physical composition digital identifier,
- at least one pH of the composition digital identifier that is associated to a physical composition digital identifier,
- at least one citral concentration digital identifier that is associated to a physical composition digital identifier,
- at least one shelf life of the product digital identifier that is associated to a physical composition digital identifier and/or
- at least one full sensory data of the composition digital identifier that is associated to a physical composition digital identifier.

Such a set of exemplar data may be obtained by assembling physical composition digital identifiers of ingredients, presenting said physical composition digital identifiers to human users and recording the reactions of those users in a database. These recordings may be classified by types of reaction ('like', 'dislike', 'smiling', 'move away') for example. This classification may be performed manually, by associating a tag to each reaction, or automatically, by a computing system configured to process text, audio, photographic or video recordings in order to determine a type of reaction among a list of possible types of reactions. These types of reaction may be associated to a type of reaction digital identifier that may then be used in the set of exemplar data.

This exemplar data may then be input 705 into a gradient boosting trees device and then said device may be operated 710 to train a trained gradient boosting trees model 305 which is obtained as an output 715 of the step 710 of training said gradient boosting trees model.

Such an example has, as an objective, to predict a value representative of a reaction in association with a specific association of ingredients forming a physical composition digital identifier, whereas the examples of figures 1 to 5 predict a relative value of a reaction in association with a specific association of ingredients forming a physical composition digital identifier (i.e., a particular physical composition digital identifier triggers more a particular emotion or sensation for users than another physical composition digital identifier).

In particular embodiments, the method object of the present invention comprises, downstream of the step of operating the trained ensemble of gradient boosting trees device, a step of determining, by a computing device, a numerical value representative of a reaction impact for at least one input flavor or fragrance ingredient and a step of providing, upon a computer interface, the determined reaction impact numerical value.

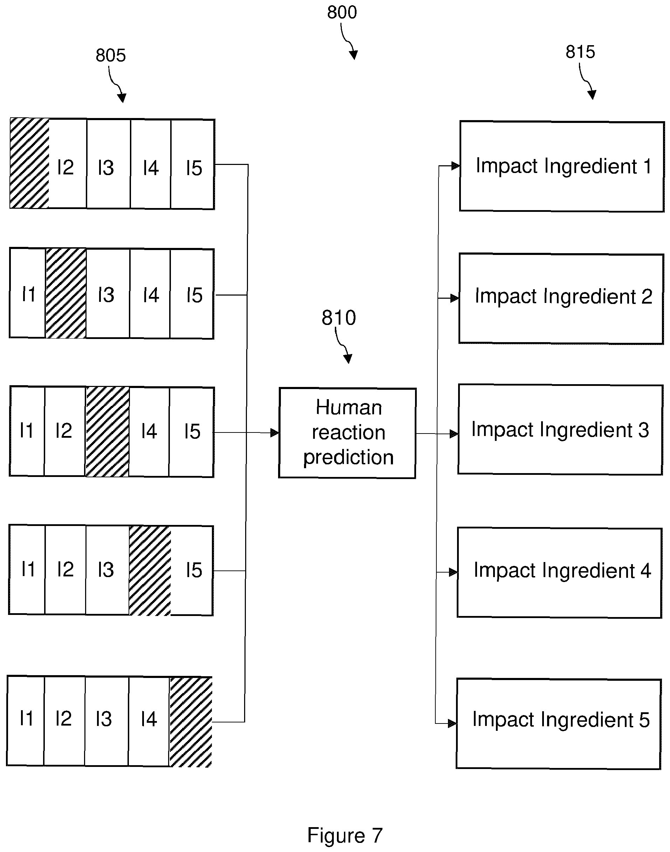

Such an embodiment is shown in relation to figure 7 which shows, schematically, an embodiment of the method 800 object of the present invention. This flavor or fragrance prediction impact upon human reaction prediction system 800, comprises:

- at least two inputs 805 comprising at least two flavor or fragrance physical ingredient digital representation identifiers, the resulting input 805 corresponding to a physical composition digital identifier of flavor or fragrance ingredients, each input 805 comprising a different set of flavor or fragrance physical ingredient digital representation identifiers,
- at least one ensemble of gradient boosting trees device 810 trained according to the method shown in figure 6, the input 805 physical composition digital identifiers being input into a single ensemble of gradient boosting trees device 810, the ensemble of gradient boosting trees device 810 being configured to provide a prediction for each input 805 physical composition digital identifier, and

- a prediction output 815 of the impact of each flavor or fragrance physical ingredient digital representation identifier as a function of the predictions of the decision tree neural network device 810.

Such a prediction output 815 may be obtained by the relative comparison of human reaction prediction output for each physical composition digital identifier and, based upon the physical composition digital identifier constitutive ingredients, associate with each ingredient an impact score.

Figure 8 represents a block diagram that illustrates an example computer system 900 with which an embodiment of the present invention may be implemented. In the example of figure 8, a computer system 905 and instructions for implementing the disclosed technologies in hardware, software, or a combination of hardware and software, are represented schematically, for example as boxes and circles, at the same level of detail that is commonly used by persons of ordinary skill in the art to which this disclosure pertains for communicating about computer architecture and computer systems implementations.

The computer system 905 includes an input/output (IO) subsystem 920 which may include a bus and/or other communication mechanism(s) for communicating information and/or instructions between the components of the computer system 905 over electronic signal paths. The I/O subsystem 920 may include an I/O controller, a memory controller and at least one I/O port. The electronic signal paths are represented schematically in the drawings, for example as lines, unidirectional arrows, or bidirectional arrows.

At least one hardware processor 910 is coupled to the I/O subsystem 920 for processing information and instructions. Hardware processor 910 may include, for example, a general-purpose microprocessor or microcontroller and/or a special-purpose microprocessor such as an embedded system or a graphics processing unit (GPU) or a digital signal processor or ARM processor. Processor 910 may comprise an integrated arithmetic logic unit (ALU) or may be coupled to a separate ALU.

Computer system 905 includes one or more units of memory 925, such as a main memory, which is coupled to I/O subsystem 920 for electronically digitally storing data and instructions to be executed by processor 910. Memory 925 may include volatile memory such as various forms of random-access memory (RAM) or other dynamic storage device. Memory 925 also may be used for storing temporary variables or other intermediate information during execution of instructions to be executed by processor 910. Such instructions, when stored in non-transitory computer-readable storage media accessible to processor 910, can render computer system 905 into a special-purpose machine that is customized to perform the operations specified in the instructions.

Computer system 905 further includes non-volatile memory such as read only memory (ROM) 930 or other static storage device coupled to the I/O subsystem 920 for storing information and instructions for processor 910. The ROM 930 may include various forms of programmable ROM (PROM) such as erasable PROM (EPROM) or electrically erasable PROM (EEPROM). A unit of persistent storage 915 may include various forms of non-volatile RAM (NVRAM), such as FLASH memory, or solid-state storage, magnetic disk, or optical disk such as CD-ROM or DVD-ROM and may be coupled to I/O subsystem 920 for storing information and instructions. Storage 915 is an example of a non-transitory computer-readable medium that may be used to store instructions and data which when executed by the processor 910 cause performing computer-implemented methods to execute the techniques herein.

The instructions in memory 925, ROM 930 or storage 915 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. The instructions may implement a web server, web application server or web client. The instructions may be organized as a presentation layer, application layer and data storage layer such as a relational database system using structured query language (SQL) or no SQL, an object store, a graph database, a flat file system or other data storage.

Computer system 905 may be coupled via I/O subsystem 920 to at least one output device 935. In one embodiment, output device 935 is a digital computer display or Human Machine Interface. Examples of a display that may be used in various embodiments include a touch screen display or a light-emitting diode (LED) display or a liquid crystal display (LCD) or an e-paper display. Computer system 905 may include other type(s) of output devices 935, alternatively or in addition to a display device. Examples of other output devices 935 include printers, ticket printers, plotters, projectors, sound cards or video cards, speakers, buzzers or piezoelectric devices or other audible devices, lamps or LED or LCD indicators, haptic devices, actuators, or servos.

At least one input device 940 is coupled to I/O subsystem 920 for communicating signals, data, command selections or gestures to processor 910. Examples of input devices 940 include touch screens, microphones, still and video digital cameras, alphanumeric and other keys, keypads, keyboards, graphics tablets, image scanners, joysticks, clocks, switches, buttons, dials, slides.

Another type of input device is a control device 945, which may perform cursor control or other automated control functions such as navigation in a graphical interface on a display screen, alternatively or in addition to input functions. Control device 945 may be a touchpad, a mouse, a trackball, or cursor direction keys for communicating direction information and command selections to processor 910 and for controlling cursor movement on display 935. The input device may have at least two degrees of freedom in two axes, a first axis (e.g., x) and a second axis (e.g., y), that allows the device to specify positions in a plane. Another type of input device is a wired, wireless, or optical control device such as a joystick, wand, console, steering wheel, pedal, gearshift mechanism or other type of control device. An input device 940 may include a combination of multiple different input devices, such as a video camera and a depth sensor.

In another embodiment, computer system 905 may comprise an internet of things (IoT) device in which one or more of the output device 935, input device 940, and control device 945 are omitted. Or, in such an embodiment, the input device 940 may comprise one or more cameras, motion detectors, thermometers, microphones, seismic detectors, other sensors or detectors, measurement devices or encoders and the output device 935 may comprise a special-purpose display such as a single-line LED or LCD display, one or more indicators, a display panel, a meter, a valve, a solenoid, an actuator or a servo.

Computer system 905 may implement the techniques described herein using customized hard-wired logic, at least one ASIC or FPGA, firmware and/or program instructions or logic which when loaded and used or executed in combination with the computer system causes or programs the computer system to operate as a special-purpose machine. According to one embodiment, the techniques herein are performed by computer system 905 in response to processor 910 executing at least one sequence of at least one instruction contained in main memory 925. Such instructions may be read into main memory 925 from another storage medium, such as storage 915. Execution of the sequences of instructions contained in main memory 925 causes processor 910 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical or magnetic disks, such as storage 915. Volatile media includes dynamic memory, such as memory 925. Common forms of storage media include, for example, a hard disk, solid state drive, flash drive, magnetic data storage medium, any optical or physical data storage medium, memory chip, or the like.

Storage media is distinct from but may be used in conjunction with transmission media. Transmission media participates in transferring information between storage media. For example, transmission media includes coaxial cables, copper wire and fiber optics, including the wires that comprise a bus of I/O subsystem 920. Transmission media can also take the form of acoustic or light waves, such as those generated during radiowave and infra-red data communications.

Various forms of media may be involved in carrying at least one sequence of at least one instruction to processor 910 for execution. For example, the instructions may initially be carried on a magnetic disk or solid-state drive of a remote computer. The remote computer can load the instructions into its dynamic memory and send the instructions over a communication link such as a fiber optic or coaxial cable or telephone line using a modem. A modem or router local to computer system 905 can receive the data on the communication link and convert the data to a format that can be read by computer system 905. For instance, a receiver such as a radio frequency antenna or an infrared detector can receive the data carried in a wireless or optical signal and appropriate circuitry can provide the data to I/O subsystem 920 such as place the data on a bus. I/O subsystem 920 carries the data to memory 925, from which processor 910 retrieves and executes the instructions. The instructions received by memory 925 may optionally be stored on storage 915 either before or after execution by processor 910.

Computer system 905 also includes a communication interface 960 coupled to bus 920. Communication interface 960 provides a two-way data communication coupling to network link(s) 965 that are directly or indirectly connected to at least one communication network, such as a network 970 or a public or private cloud on the Internet. For example, communication interface 960 may be an Ethernet networking interface, integrated-services digital network (ISDN) card, cable modem, satellite modem, or a modem to provide a data communication connection to a corresponding type of communications line, for example an Ethernet cable or a metal cable of any kind or a fiber-optic line or a telephone line. Network 970 broadly represents a local area network (LAN), wide-area network (WAN), campus network, internetwork, or any combination thereof. Communication interface 960 may comprise a LAN card to provide a data communication connection to a compatible LAN, or a cellular radiotelephone interface that is wired to send or receive cellular data according to cellular radiotelephone wireless networking standards, or a satellite radio interface that is wired to send or receive digital data according to satellite wireless networking standards. In any such implementation, communication interface 960 sends and receives electrical, electromagnetic, or optical signals over signal paths that carry digital data streams representing various types of information.

Network link 965 typically provides electrical, electromagnetic, or optical data communication directly or through at least one network to other data devices, using, for example, satellite, cellular, Wi-Fi, or BLUETOOTH technology. For example, network link 965 may provide a connection through a network 970 to a host computer 950.

Furthermore, network link 965 may provide a connection through network 970 or to other computing devices via internetworking devices and/or computers that are operated by an Internet Service Provider (ISP) 975. ISP 975 provides data communication services through a world-wide packet data communication network represented as internet 980. A server computer 955 may be coupled to internet 980. Server 955 broadly represents any computer, data center, virtual machine, or virtual computing instance with or without a hypervisor, or computer executing a containerized program system such as DOCKER or KUBERNETES. Server 955 may represent an electronic digital service that is implemented using more than one computer or instance and that is accessed and used by transmitting web services requests, uniform resource locator (URL) strings with parameters in HTTP payloads, API calls, app services calls, or other service calls. Computer system 905 and server 955 may form elements of a distributed computing system that includes other computers, a processing cluster, server farm or other organization of computers that cooperate to perform tasks or execute applications or services. Server 955 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. Server 955 may comprise a web application server that hosts a presentation layer, application layer and data storage layer such as a relational database system using structured query language (SQL) or no SQL, an object store, a graph database, a flat file system or other data storage.

Computer system 905 can send messages and receive data and instructions, including program code, through the network(s), network link 965 and communication interface 960. In the Internet example, a server 955 might transmit a requested code for an application program through Internet 980, ISP 975, local network 970 and communication interface 960. The received code may be executed by processor 910 as it is received, and/or stored in storage 915, or other non-volatile storage for later execution.

The execution of instructions as described in this section may implement a process in the form of an instance of a computer program that is being executed and consisting of program code and its current activity. Depending on the operating system (OS), a process may be made up of multiple threads of execution that execute instructions concurrently. In this context, a computer program is a passive collection of instructions, while a process may be the actual execution of those instructions. Several processes may be associated with the same program; for example, opening up several instances of the same program often means more than one process is being executed. Multitasking may be implemented to allow multiple processes to share processor 910. While each processor 910 or core of the processor executes a single task at a time, computer system 905 may be programmed to implement multitasking to allow each processor to switch between tasks that are being executed without having to wait for each task to finish. In an embodiment, switches may be performed when tasks perform input/output operations, when a task indicates that it can be switched, or on hardware interrupts. Time-sharing may be implemented to allow fast response for interactive user applications by rapidly performing context switches to provide the appearance of concurrent execution of multiple processes simultaneously. In an embodiment, for security and reliability, an operating system may prevent direct communication between independent processes, providing strictly mediated and controlled inter-process communication functionality.

**Claims**

1. Method (400) of determination of an emotion or sensation perception in relation to an exposure to a flavor or fragrance ingredients, **characterized in that** it comprises:

    - a step (405) of inputting, upon a computer interface, at least two flavor or fragrance physical ingredient digital representation identifiers, the resulting input corresponding to a physical composition digital identifier representative of a physical composition of physical flavor or fragrance ingredients,
    - a step (410) of operating, by a computing device, instructions configured to associate, to the input a physical composition digital identifier, at least one value representative of:

- a relative ranking among the input flavor or fragrance physical ingredient digital representation identifiers relative to at least one determined perceived emotion or sensation,
- a value representative of the perception, for at least one input flavor or fragrance physical ingredient digital representation identifier, for at least one determined perceived emotion or sensation, and/or
- a value representative of a class of flavor or fragrance ingredients in a classification of flavor or fragrance ingredients by perception of perceived emotion or sensation for at least one determined emotion or sensation perception and

- a step (415) of providing, upon a computer interface, for the input physical composition digital identifier, at least one value obtained during the step of operating.

2. Method (400) according to claim 1, in which the step (410) of operating is configured to operate a trained gradient boosting decision tree device upon the input a physical composition digital identifier.

3. Method (400) according to claim 2, comprising:

- a step of providing (105) to the gradient boosting decision tree device or to a neural network device a set of exemplar data, comprising:

- at least two flavor or fragrance physical composition digital identifiers formed by at least two fragrant or flavor physical ingredient digital representation identifiers and
- at least one emotion or sensation perception value for the at least two said fragrant or flavor ingredients, said emotion or sensation perception value being associated to at least one emotion or sensation perception digital identifier, said emotion or sensation perception digital identifier being representative of a category of emotion or sensation reaction, among a finite list of emotion or sensation reactions, of a human being to the materialized physical composition digital identifier,

- a step of operating (110) the gradient boosting decision tree device or to a neural network device based upon the set of exemplar data and
- a step of obtaining (115) a trained gradient boosting decision tree model or a trained neural network model.

4. Method (400) according to claim 3, in which the exemplar data further comprises, associated with at least one physical composition digital identifier, at least one digital identifier representative of:

- a gender (103) of the human being exposed to the materialized physical composition,
- a country (104) of origin of the human being exposed to the materialized physical composition,
- a type of use (106) of the materialized physical composition,
- a composition chemical base (107) used to support the materialized physical composition, and/or
- a dosage (108) for at least one physical ingredient flavor or fragrance physical ingredient represented by the corresponding digital representation identifier.

5. Method (400) according to any one of claims 2 to 4, comprising, downstream of the step (410) of operating, a step (420) of determining, by a computing device, a numerical value representative of an emotion or sensation reaction impact for at least one input flavor or fragrance ingredient and a step (415) of providing, upon a computer interface, the determined reaction impact numerical value.

6. Method (400) according to claim 5, comprising, downstream of the step (420) of determining a numerical value representative of an emotion or sensation reaction impact, a step (435) of providing at least one alternative flavor or fragrance physical ingredient digital representation identifier for at least one input flavor or fragrance physical ingredient digital representation identifier to form an alternative physical composition digital identifier as function of the value representative of an emotion or sensation reaction impact associated to said input and alternative flavor or fragrance physical ingredient digital representation identifier.

7. Method (400) according to claim 6, in which the step (435) of providing at least one alternative flavor or fragrance physical ingredient digital representation identifier is configured to further provide at least one value representative of a concentration of at least one said alternative flavor or fragrance physical ingredient digital representation identifier.

**8.** Method (400) according to any one of claims 6 or 7, in which the step (435) of providing at least one alternative flavor or fragrance physical ingredient digital representation identifier is configured to further provide a minimum and/or a maximum value representative of a concentration of at least one said alternative flavor or fragrance physical ingredient digital representation identifier.

**9.** Method (400) according to any one of claims 1 to 8, comprising a step (430) of assembling a physical composition corresponding to the input physical composition digital identifier or of providing the input physical composition digital identifier to a system configured to assemble physical compositions.

**10.** Method (400) according to any one of claims 1 to 9, comprising:

- a step (401) of assembling a database associating for at least one group of at least two flavor or fragrance physical ingredient digital representation identifiers, a value representative of a measured human emotion or sensation perception and
- a step (407) of determining, by a computing device, a set of instructions to be operated during the step (410) of operating.

**11.** Method (400) according to claim 10, in which the step (401) of assembling a database comprises:

- a step (402) of exposure at least one human being to a physical composition of flavor or fragrance physical ingredients,
- a step (403) of measuring the emotion or sensation perception of said at least one human being exposed to said physical composition and
- a step (404) of recording, in a database, a value representative of the measured perceived emotion or sensation in association to the group of flavor or fragrance physical ingredient digital representation identifiers representative of the physical ingredients used to for the composition used during the step of exposure.

**12.** Method (400) according to any one of claims 1 to 11, which comprises a step (406) of substituting an input flavor or fragrance physical ingredient digital representation identifiers by a different and equivalent flavor or fragrance physical ingredient digital representation identifiers, said equivalence being defined in a database of equivalent flavor or fragrance physical ingredient digital representation identifiers.

**13.** Method (400) according to any one of claims 1 to 12, in which the step (410) of operating comprises:

- a first step (411) of associating, by a computing device, at least one olfactive or taste descriptor to at least one input flavor or fragrance physical ingredient digital representation identifier and
- a second step (412) of associating, by a computing device, at least one perceived emotion or sensation as a function of at least one olfactive or taste descriptor associated to at least one input flavor or fragrance physical ingredient digital representation identifier.

**14.** Method (400) according to any one of claims 1 to 13, in which at least one emotion or sensation perception is representative of a perception of health or hygiene benefit associated to the exposition to the physical composition.

**15.** System (500) of determination of an emotion or sensation perception in relation to an exposure to a flavor or fragrance ingredients, **characterized in that** it comprises:

- a step (505) of inputting, upon a computer interface (510), at least two flavor or fragrance physical ingredient digital representation identifiers, the resulting input corresponding to a physical composition digital identifier representative of a physical composition of physical flavor or fragrance ingredients,
- a step (515) of operating, by a computing device (520), instructions configured to associate, to the input a physical composition digital identifier, at least one value representative of:

- a relative ranking among the input flavor or fragrance physical ingredient digital representation identifiers relative to at least one determined perceived emotion or sensation,
- a value representative of the perception, for at least one input flavor or fragrance physical ingredient digital representation identifier, for at least one determined perceived emotion or sensation, and/or
- a value representative of a class of flavor or fragrance ingredients in a classification of flavor or fragrance ingredients by perception of perceived emotion or sensation for at least one determined emotion or sensation

EP 4 280 143 A1

perception and

- a step (525) of providing, upon a computer interface, for the input physical composition digital identifier, at least one value obtained during the step of operating.

Figure 1

200

| Providing a set of exemplar data |
|---|

105

| Operating a gradient boosting decision tree device |
|---|

110

| Obtaining a gradient boosting decision tree device |
|---|

115

Figure 2

400

Assembling a database

401

Exposure

402

Measuring

403

Recording

404

200 → Training a gradient boosting decision tree device

407

Inputting a physical composition digital identifier

405

Substituting

406

Operating

410

Associating at least one descriptor

411

Associating at least one emotion or sensation reaction

412

Determining reaction impact for at least one ingredient in the composition

420

| Providing a relative ranking | Providing a value | Providing a class |
|---|---|---|

415          415          415

Providing at least one alternative ingredient

435

Assembling the composition

430

Figure 3

Figure 4

Figure 5

Figure 6

800

805

815

810

| I2 | I3 | I4 | I5 |

| I1 | | I3 | I4 | I5 |

| I1 | I2 | | I4 | I5 |

| I1 | I2 | I3 | | I5 |

| I1 | I2 | I3 | I4 | |

Human
reaction
prediction

Impact Ingredient 1

Impact Ingredient 2

Impact Ingredient 3

Impact Ingredient 4

Impact Ingredient 5

Figure 7

Figure 8

Europäisches
Patentamt

European
Patent Office

Office européen
des brevets

# EUROPEAN SEARCH REPORT

Application Number

EP 23 17 3457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/411140 A1 (PAPPAS IRAKLIS [US] ET AL) 31 December 2020 (2020-12-31) <br> * abstract * <br> * paragraph [0002] – paragraph [0014] * <br> * paragraph [0037] – paragraph [0159] * <br> * figures 1A-12 * | 1-15 | INV. <br> G06Q30/0201 <br> G06Q30/06 <br> G06N20/00 <br> G06Q30/0282 |
| X | US 2021/256542 A1 (MCDANIEL F KENNEDY [US] ET AL) 19 August 2021 (2021-08-19) <br> * abstract * <br> * paragraph [0002] – paragraph [0021] * <br> * paragraph [0032] – paragraph [0213] * <br> * claims 1-20; figures 1-10 * | 1-15 | |
| X | US 2016/171514 A1 (FRANK ARI M [IL] ET AL) 16 June 2016 (2016-06-16) <br> * abstract * <br> * paragraph [0002] – paragraph [0006] * <br> * paragraph [0108] – paragraph [0371] * <br> * paragraph [0374] – paragraph [0380] * <br> * paragraph [0387] – paragraph [0400] * <br> * paragraph [0411] – paragraph [0412] * <br> * paragraph [0500] – paragraph [0501] * <br> * paragraph [0520] – paragraph [0913] * <br> * figures 1a-9 * | 1-15 | |
| A | Anonymous: "Gradient boosting – Wikipedia", <br> , <br> 9 April 2021 (2021-04-09), XP055848059, <br> Retrieved from the Internet: <br> URL:https://en.wikipedia.org/w/index.php?title=Gradient_boosting&oldid=1016946224 <br> [retrieved on 2021-10-05] <br> * the whole document * | 1-9 | |

**TECHNICAL FIELDS SEARCHED (IPC)**

G06Q
G06N

The present search report has been drawn up for all claims

| Place of search | Date of completion of the search | Examiner |
|---|---|---|
| The Hague | 7 July 2023 | Bassanini, Anna |

EPO FORM 1503 03.82 (P04C01)

**ANNEX TO THE EUROPEAN SEARCH REPORT
ON EUROPEAN PATENT APPLICATION NO.**

EP 23 17 3457

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2023

| Patent document cited in search report | | Publication date | Patent family member(s) | | Publication date |
|---|---|---|---|---|---|
| US 2020411140 | A1 | 31-12-2020 | AU | 2020301331 A1 | 27-01-2022 |
| | | | BR | 112021025468 A2 | 26-04-2022 |
| | | | CA | 3145324 A1 | 30-12-2020 |
| | | | CN | 114008714 A | 01-02-2022 |
| | | | EP | 3973535 A1 | 30-03-2022 |
| | | | US | 10515715 B1 | 24-12-2019 |
| | | | US | 10839941 B1 | 17-11-2020 |
| | | | US | 10839942 B1 | 17-11-2020 |
| | | | US | 10861588 B1 | 08-12-2020 |
| | | | US | 2021151130 A1 | 20-05-2021 |
| | | | US | 2021158905 A1 | 27-05-2021 |
| | | | US | 2022359044 A1 | 10-11-2022 |
| | | | WO | 2020264547 A1 | 30-12-2020 |
| US 2021256542 | A1 | 19-08-2021 | US | 2021256542 A1 | 19-08-2021 |
| | | | WO | 2019183612 A1 | 26-09-2019 |
| US 2016171514 | A1 | 16-06-2016 | US | 2016171514 A1 | 16-06-2016 |
| | | | US | 2018025368 A1 | 25-01-2018 |

EPO FORM P0459

For more details about this annex : see Official Journal of the European Patent Office, No. 12/82